# EUROPÄISCHE PATENTSCHRIFT

(11) **EP 2 171 313 B1**
(45) Veröffentlichungstag und Bekanntmachung des Hinweises auf die Patenterteilung: **03.12.2014**
(21) Anmeldenummer: 08759020.4
(22) Anmeldetag: 04.06.2008
(51) Int. Cl.: F16H 57/02, F16H 57/033

(54) **GETRIEBE-BAUREIHE UND VERFAHREN ZUR HERSTELLUNG VON GETRIEBEN**
TRANSMISSION SERIES AND METHOD FOR PRODUCING TRANSMISSIONS
GAMME DE TRANSMISSIONS ET PROCÉDÉ DE PRODUCTION DE TRANSMISSIONS

(30) Priorität: 17.07.2007 DE 102007033652
(43) Veröffentlichungstag der Anmeldung: 07.04.2010
(73) Patentinhaber: SEW-EURODRIVE GmbH & Co. KG, 76646 Bruchsal (DE)
(72) Erfinder: HOLDERBACH, Thomas, 76149 Karlsruhe (DE); MEGERLE, Jürgen, 76694 Forst (DE); BÜHN, Oliver, 76703 Kraichtal (DE)
(86) Internationale Anmeldenummer: PCT/EP2008/004464
(87) Internationale Veröffentlichungsnummer: WO 2009/010127

(56) Entgegenhaltungen:
- EP-A- 0 617 214
- WO-A-01/71220
- WO-A-03/100296
- WO-A-2006/018085
- CN-A- 1 945 060
- JP-A- 2007 132 527
- US-A- 3 029 661
- US-A- 3 590 652
- ANONYMOUS: "Passfeder" INTERNET ARTICLE, [Online] 7. Juli 2008 (2008-07-07), Seiten 1-3, XP002491983 Gefunden im Internet: URL:http://de.wikipedia.org/wiki/Passfeder > [gefunden am 2008-08-12]

## Beschreibung

Die Erfindung betrifft eine Getriebe-Baureihe und ein Verfahren zur Herstellung von Getrieben.

Aus der DE 196 25 370 C1 ist eine Schleifmaschine zum Schleifen von Stirnzahnrädern bekannt, die universell zum Schleifen zylindrischer aber auch konischer Stirnräder einsetzbar ist, wobei mit ihr nahezu alle erdenklichen Zahnprofilformen geschliffen werden können, insbesondere auch sogenannte topologisch modifizierte Verzahnungen.

Aus der DE 100 13 785 A1 ist ein Getriebebaukasten, umfassend in mindestens einer Baustufe mit einem Gehäuse mehrere Getriebe mit verschiedenen Übersetzungen, die jeweils eine erste Getriebestufe aufweisen, bekannt, wobei ein Winkelgetriebe einen Achsversatz hat und der Achsversatz für alle Getriebe einer Baustufe gleich ist und wobei mindestens ein erstes Ritzel des Winkelgetriebes mit einem ersten stirnverzahnten Planrad in einer Kronradverzahnung und ein zweites Ritzel mit einem zweiten Planrad in einer Spiroplanverzahnung vorgesehen sind.

Aus der US 3 029 661 A ist ein Allzweckgetriebe bekannt, das eine zweistufige Variante und eine dreistufige Variante umfasst.

Aus der EP 1 215 417 A2 ist eine Baureihe von ein- oder mehrstufigen Getrieben bekannt, die mindestens eine Baugröße von Getrieben umfasst, wobei jede Baugröße jeweils mindestens eine Variante umfasst, die jeweils mindestens ein Gehäuseteil und mindestens eine Getriebestufe umfasst, und wobei die jeweilige Getriebestufe durch mindestens einen Achsabstand kennzeichenbar ist und bei einer Baugröße mindestens zwei Varianten zwei verschiedene Achsabstände aufweisen, wobei die Gehäuseteile der zwei Varianten beim Fertigen mindestens aus demselben gegossenen Rohteil fertigbar sind und wobei das Fertigen mindestens eine spanende Bearbeitung umfasst.

Aus WO01/71220A1 ist ein Getriebebaukasten bekannt, bei welchem eine Ausbildung einer Abtriebswelle als Hohlwelle auch bei einer Ausführungsform, bei der die Abtriebswelle als Vollwelle ausgeführt ist, anwendbar ist.

Die Erfindung betrifft insbesondere die Ausgestaltung und die Fertigung der Welle-Nabe-Verbindung zwischen der Nabe eines Verzahnteils und einer Welle.

Aus der DIN 6885 Blatt 1 bis 3 ist bekannt, welche Passfedergeometrie, insbesondere welche Wellennuttiefe, welche Nabennuttiefe, welche Passfederbreite und welche Passfederhöhe, für einen vorgelegten Wellendurchmesser einer Welle-Nabe-Verbindung mit Passfeder zu wählen ist.

Der Erfindung liegt die Aufgabe zugrunde, eine einfache Getriebe-Baureihe bereitzustellen.

Erfindungsgemäß wird die Aufgabe bei der Getriebe-Baureihe nach den in Anspruch 1, 2 oder 3 angegebenen Merkmalen und bei dem Verfahren zur Herstellung von Getrieben nach den in Anspruch 12 oder 15 angegebenen Merkmalen gelöst.

Wichtige Merkmale der Erfindung einer Getriebe-Baureihe sind Gegenstand von Anspruch 1. Insbsondere ist somit vorgesehen, dass eine erste Variante mit einer als Hohlwelle ausgebildeten Abtriebswelle und eine zweite Variante mit einer als Vollwelle ausgebildeten Abtriebswelle umfasst sind, wobei der Bohrungsdurchmesser der Bohrung im Zahnrad der Abtriebswelle der ersten Variante gleich ist dem Bohrungsdurchmesser der Bohrung im Zahnrad der Abtriebswelle der zweiten Variante. Somit sind Fertigungsmittel für die Bohrung wiederverwendbar und es ist für die Weiterbearbeitung der Zahnräder, insbesondere das Herstellen der Verzahnung, ein einheitliches Aufspannmittel verwendbar.

Die eintreibende Welle und/oder die Abtriebswelle ist/sind oder sind generell als Drywell, also mit leckagegeschützer Gehäusedurchführung, oder als Flanschblockwelle ausgebildet.

Weiter ist bei der Erfindung ist das Zahnrad der ersten Variante für ein geringeres Nenn-Drehmoment ausgelegt als das Zahnrad der zweiten Variante und/oder es ist die Verzahnungsbreite des Zahnrads der ersten Variante kleiner als die Verzahnungsbreite des Zahnrads der zweiten Variante. Alternativ ist der Teilkreisdurchmesser des Zahnrades der ersten Variante kleiner als der des Zahnrades der zweiten Variante. Somit ist eine Radsitzbohrung für ein Zahnrad, das auf einer Hohlwelle vorgesehen ist, bei einem Zahnrad einsetzbar, das auf einer Vollwelle mit größerem Nenn-Drehmoment montiert wird. Beide Zahnräder lassen sich somit auf ein einheitliches Aufspannmittel zur Bearbeitung der Verzahnungen - die verschieden sein können - aufspannen.

Alternativ können zur Lösung der Aufgabe die Merkmale von Anspruch 2 vorgesehen sein. Insbesondere kann somit vorgesehen sein, dass eine erste Variante mit einem ersten Achsabstand zwischen eintreibender Welle und Abtriebswelle und eine zweite Variante mit einem zweiten Achsabstand zwischen eintreibender Welle und Abtriebswelle ausgebildet ist, wobei der zweite Achsabstand größer als der erste Achsabstand ist und der Bohrungsdurchmesser der Bohrung im Zahnrad der Abtriebswelle der ersten Variante gleich ist dem Bohrungsdurchmesser der Bohrung im Zahnrad der Abtriebswelle der zweiten Variante, und es ist bei der ersten Variante die tragende Länge oder die gesamte Länge der Passfeder des Zahnrades der abtreibenden Welle kleiner als die Nabenbreite des Zahnrades und bei der zweiten Variante die tragende Länge oder die gesamte Länge der Passfeder des Zahnrades der abtreibenden Welle gleich der oder größer als die Nabenbreite des Zahnrades. Die tragende Länge ist hierbei der Abschnitt, der die Drehmoment übertragende Kontaktfläche zwischen Passfeder und Zahnrad in Längsrichtung charakterisiert. Somit ist ein einheitliches Aufspannmittel nicht nur für die Fertigung von verschiedenen Zahnrädern für dieselbe Welle, die also beispielsweise durch eine unterschiedliche Zähnezahl gekennzeichnet sind, sondern auch für die Fertigung von verschiedenen Zahnrädern für verschiedene Wellen verwendbar, wobei die Wellen jeweils für ein unterschiedliches Abtriebsmoment ausgelegt sind.

Unter Zahnrad ist allgemein ein Verzahnteil gemeint. Das Verzahnteil ist vorzugsweise im Schrumpfsitz und/oder mit einer formschlüssigen Verbindung, beispielsweise einer Passfederverbindung oder einer Vierkantverbindung, auf der Welle befestigt.

Bei einer vorteilhaften Ausgestaltung ist die abtreibende Welle der ersten Variante eine Hohlwelle und die abtreibende Welle der zweiten Variante eine Vollwelle. Somit ist ein einfaches Muster angegeben, wie innerhalb einer Baureihe Varianten mit einheitlichem Radsitzbohrungsdurchmesser vorsehbar sind. Denn eine Hohlwelle zu einem gegebenen Abtriebsmoment und zu einem gegebenen Achsabstand von eintreibender Welle und Abtriebswelle hat mindestens den gleichen Durchmesser wie eine entsprechende Vollwelle. Insbesondere bei Wellendurchmessern von 150mm und mehr und/oder bei Abtriebsmomenten von 50kNm und mehr ist die Hohlwelle ungefähr 10% dicker als die Vollwelle, weshalb zu einer Vollwelle gegebenen Durchmessers eine Hohlwelle vergleichbaren Durchmessers bei einer Variante mit höherem Abtriebsmoment und also größerem Achsabstand zwischen Antriebs- und Abtriebswelle verwendet wird. Dieser Umstand wird vorteilhaft ausgenutzt, um eine Wiederverwendbarkeit eines einheitlichen Aufspannmittels zur Fertigung unterschiedlicher Zahnräder für unterschiedliche Getriebe-Varianten zu ermöglichen. Somit sind die Herstellungskosten reduziert.

Unter Radsitz wird der Befestigungsbereich des betreffenden Verzahnteils auf seiner Welle verstanden.

Bei einer vorteilhaften Ausgestaltung ist bei der ersten Variante die Länge der Passfeder des Zahnrades der abtreibenden Welle kleiner als die Nabenbreite des Zahnrades und bei der zweiten Variante die Länge der Passfeder des Zahnrades der abtreibenden Welle größer als die Nabenbreites des Zahnrades. Somit ist es möglich, den Durchmesser der Welle im Bereich der Nabe und also den Durchmesser der Radsitzbohrung bei der zweiten Variante kleiner als üblich zu wählen, denn eines der schwächsten Glieder in der Kraftübertragungskette zwischen Welle und Zahnradnabe, die Passfeder, wird verstärkt, indem die überhaupt verfügbare Kontaktfläche in der Zahnradnabe ausgenutzt wird. Eine Vergrößerung des Wellendurchmessers und die damit einhergehende Vergrößerung der Passfeder, die ebenfalls die Passfeder verstärken würde, sind somit verzichtbar. Die Nabennut der Passfeder ist somit in der zweiten Variante von einer Seite des Zahnrads bis zur anderen durchgängig ausgeführt und weist keine axialen Endbereiche auf.

Bei einer vorteilhaften Ausgestaltung ist bei der ersten Variante die Länge der Passfeder des Zahnrades der abtreibenden Welle kleiner als die Nabenbreite des Zahnrades und bei der zweiten Variante die Länge der Passfeder des Zahnrades der abtreibenden Welle mindestens zwei Millimeter, insbesondere drei Millimeter, größer als die Nabenbreite des Zahnrades. Somit ist sichergestellt, dass die Passfeder selbst bei einer axialen Positioniergenauigkeit von ungefähr 1mm die gesamte Breite der Zahnradnabe zur Kraftübertragung nutzen kann.

Bei einer vorteilhaften Ausgestaltung ist bei mindestens einer Variante, insbesondere der zweiten Variante, der Querschnitt der Passfeder des Zahnrades der abtreibenden Welle größer als die Vorgabe gemäß DIN 6885 gewählt. Somit ist es möglich, den Durchmesser der Welle im Bereich der Nabe und also den Durchmesser der Radsitzbohrung bei der zweiten Variante kleiner als üblich zu wählen, denn eines der schwächsten Glieder in der Kraftübertragungskette zwischen Welle und Zahnradnabe, die Passfeder, wird verstärkt. Es hat sich herausgestellt, dass die Stabilität der Welle durch die tiefer ausgeführte Wellennut der Passfeder nicht beeinträchtigt wird.

Bei einer vorteilhaften Ausgestaltung ist bei mindestens einer Variante die Wellennuttiefe der Passfedernut des Zahnrades der abtreibenden Welle größer als die Vorgabe gemäß DIN 6885 gewählt. Somit ist es möglich, den Durchmesser der Welle im Bereich der Nabe und also den Durchmesser der Radsitzbohrung bei der zweiten Variante kleiner als üblich zu wählen, denn eines der schwächsten Glieder in der Kraftübertragungskette zwischen Welle und Zahnradnabe, der Sitz der Passfeder in der Welle, wird verstärkt. Es hat sich herausgestellt, dass der Sitz der Passfeder in der Nabennut auch nach Tieferlegen der Passfeder ausreichend stabil ist. Eine Vergrößerung des Wellendurchmessers und die damit einhergehende Vergrößerung der Passfeder, die ebenfalls den Sitz der Passfeder in der Welle verstärken würde, sind somit verzichtbar.

Bei einer vorteilhaften Ausgestaltung ist bei mindestens einer Variante die Wellennuttiefe der Passfedernut des Zahnrades der abtreibenden Welle zwei Millimeter größer als die Vorgabe gemäß DIN 6885 gewählt. Es hat sich herausgestellt, dass sowohl bei Hohlwellen als auch bei Vollwellen die Festigkeit für das angestrebte Drehmoment nicht beeinträchtigt wird durch ein Tieferlegen der Passfeder in der Welle um zwei Millimeter.

Bei einer vorteilhaften Ausgestaltung ist bei mindestens einer Variante die abtreibende Welle eine Vollwelle und es ist die Wellennuttiefe der Passfedernut des Zahnrades der abtreibenden Welle drei Millimeter größer als die Vorgabe gemäß DIN 6885 gewählt.. Es hat sich herausgestellt, dass bei Vollwellen die Festigkeit für das angestrebte Drehmoment sogar nicht beeinträchtigt wird durch ein Tieferlegen der Passfeder in der Welle um drei Millimeter. Bei einer vorteilhaften Ausgestaltung weist die abtreibende Welle jeder Variante einen Bereich mit erhöhtem Wellendurchmesser auf, der eine Wellenschulter ausbildet, an der das Zahnrad der abtreibenden Welle festgelegt ist, wobei ein Endbereich der Passfedernut des Zahnrades in die Wellenschulter hineinragt. Somit ist einerseits das aufgesteckte Zahnrad durch die Wellenschulter axial festgelegt und andererseits die Nabenbreite des Zahnrads vollständig zur Kraftübertragung durch die Passfeder nutzbar.

Bei einer vorteilhaften Ausgestaltung weist der Endbereich einen gebogenen Kantenabschnitt auf, dessen Krümmungsmittelpunkt im Inneren des Bereichs mit erhöhtem Wellendurchmesser, insbesondere mindestens zwei Millimeter von der Bereichsgrenze entfernt, liegt. Somit ist eine Passfedernut ausgebildet, die sicherstellt, dass die Passfeder die gesamte Nabenbreite des Zahnrads zur Kraftübertragung nutzen kann. Denn die Krümmungsmittelpunkte kennzeichnen das Ende der eingelegten Passfeder, und durch die angegebene Versetzung ragt die Passfeder sicher, also selbst bei einer Positionierungenauigkeit von 1 mm, in die Wellenschulter hinein.

Bei einer vorteilhaften Ausgestaltung ist die Passfedernut des Zahnrades der abtreibenden Welle geradstirnig ausgeführt. Somit ist eine Nutform für die Passfedernut angegeben, die sich leicht fräsen lässt. Durch die angegebene Nutform ist ein Fräswerkzeug verwendbar, dessen Durchmesser deutlich kleiner ist als die Breite der Passfedernut. Somit ist dasselbe Fräswerkzeug für eine Vielzahl unterschiedlicher Nutbreiten verwendbar. Vorzugsweise weisen die Passfedern eine Breite von 50mm und mehr auf.

Bei einer vorteilhaften Ausgestaltung weist die abtreibende Welle jeder Variante einen Bereich mit erhöhtem Wellendurchmesser auf, der eine Wellenschulter ausbildet, an der das Zahnrad der abtreibenden Welle festgelegt ist, wobei die in die Passfedernut eingelegte Passfeder des Zahnrades in die Wellenschutter hineinragt. Somit ist eine axiale Positionierung der Passfedernut angegeben, die eine Mehrfachkerbwirkung an der Wellenschulter vermeidet. Denn die Wellenschulter stellt für sich schon eine Kerbung der Welle dar.

Bei einer vorteilhaften Ausgestaltung ist eine dritte Variante mit dem zweiten Abstand zwischen eintreibender Welle und Abtriebswelle ausgebildet, wobei das Zahnrad der abtreibenden Welle einen größeren Bohrungsdurchmesser aufweist als das Zahnrad der abtreibenden Welle der zweiten Variante und die Passfeder des Zahnrades der abtreibenden Welle der dritten Variante gleich ist der Passfeder des Zahnrades der abtreibenden Welle der zweiten Variante. Von Vorteil ist dabei, dass die Passfeder wiederverwendbar ist in mehreren Varianten. Dies ist besonders vorteilhaft bei Passfedern mit einer Breite von mindestens 50 mm und einer Länge von mindestens 100 mm, für welche die Lagerkosten und die Materialkosten erheblich sind, Durch die beschriebene Wiederverwendung der Passfedern muss zur Montage der Getriebe in Montagewerken, die von den Fertigungswerken für die Bauteile räumlich entfernt angeordnet sind, eine geringere Anzahl von Passfeder vorgehalten werden. Dies reduziert insbesondere die Kosten für gebundenes Material.

Bei einer vorteilhaften Ausgestaltung ist die abtreibende Welle der zweiten Variante eine Vollwelle und die abtreibende Welle der dritten Variante eine Hohlwelle, wobei die Wellennuttiefe der Passfedernut der abtreibenden Welle der dritten Variante zwei Millimeter größer ist als die Vorgabe nach DIN 6885 für den Wellendurchmesser. Es hat sich herausgestellt, dass die Festigkeit der abtreibenden Welle durch eine 2 mm tiefer ausgebildete Passfedernut selbst bei einer Hohlwellenausführung für das angestrebte Abtriebsmoment nicht beeinträchtigt wird, insbesondere wenn die Hohlwelle einen Durchmesser von mindestens 200 mm aufweist. Bei Getrieben mit einem Nenndrehmoment von 50 kNm und weniger ist auch eine um 1 mm tiefer gesetzte Passfeder vorteilhaft. In weiteren vorteilhaften Ausgestaltungen sind um einen Betrag zwischen 1 und 5 mm, beispielsweise um Beträge zwischen runden Maßen, wie 1,2 mm oder 2,5 mm oder 4,8 mm, tiefer gelegte Passfedern vorgesehen. Ausschlaggebend ist das Verhältnis von Hohlwellenbohrungsdurchmesser und Radsitzbohrungsdurchmesser, insbesondere die Restwandstärke der Hohlwelle.

Bei einer vorteilhaften Ausgestaltung ist die abtreibende Welle einer Variante eine Hohlwelle, wobei die Passfeder der Abtriebswelle einen geringeren Querschnitt aufweist als die Vorgabe gemäß DIN 6885 für den Wellendurchmesser, insbesondere wobei der Querschnitt eine Stufe kleiner ist als die Vorgabe gemäß DIN 6885 für den Wellendurchmesser, und wobei die Wellennuttiefe der Passfedernut in der Abtriebswelle größer ist, insbesondere zwei Millimeter größer ist, als die Vorgabe gemäß DIN 6885 für den Wellendurchmesser. Somit ist die Passfeder aus einer weiteren Variante wiederverwendbar bei der Hohlwellenvariante, wobei die eigentlich benötigte Festigkeit gegenüber einer Drehmomentbelastung durch einen tieferen Sitz der Passfeder bewirkt wird.

Bei einer vorteilhaften Ausgestaltung sind zweistufige und/oder dreistufige und/oder vierstufige Varianten umfasst. Von Vorteil ist dabei, dass eine Getriebe-Baureihe mit einer Vielzahl von Varianten bereitgestellt ist, die eine feine Abstufung der Abtriebsdrehmomente und/oder der Übersetzungszahlen aufweisen, wobei die einzelnen Varianten Zahnräder umfassen, die auf einer einheitlichen Aufspannvorrichtung fertigbar sind.

Bei einer vorteilhaften Ausgestaltung sind statt auf die Abtriebswelle die Merkmale der Ansprüche auf eine andere Welle, beispielsweise die eintreibende Welle oder die Welle einer zwischen eintreibender Welle und Abtriebswelle liegender Stufe, bezogen. Somit ist die Wiederverwendung der Fertigungsmittel, insbesondere der Aufspannmittel, für die Fertigung weiterer Getriebestufen vorsehbar. Vorzugsweise sind die Radsitzbohrungsgrößen auch zwischen verschiedenen Getriebestufen wiederkehrend ausgeführt, also in festen Schritten gestuft, wobei die Zahl der Stufungen deutlich geringer ist als die Zahl der Zahnrad-Varianten.

Bei einer vorteilhaften Ausgestaltung sind die abtreibenden Wellen der Varianten für ein Drehmoment größer als 50kNm, insbesondere als 100 kNm, ausgelegt und/oder weisen die Varianten jeweils eine Gesamtmasse von mindestens 1 t auf und/oder weist bei jeder Variante die Bohrung im Zahnrad einen Durchmesser von mindestens 100mm, insbesondere von mindestens 190mm, auf. Vorzugsweise weist bei jeder Variante das Zahnrad eine Breite, insbesondere Verzahnungsbreite, vom mindestens 100 mm auf und/oder beträgt bei jeder Variante der Achsabstand mindestens 300 mm. In Getriebe-Baureihen, bei denen die Varianten die beschriebenen Größen aufweisen, ist die erfindungsgemäße Wiederverwendung von Radsltzbohrungsdurchmessern besonders vorteilhaft einsetzbar, da hier die Beschaffungskosten für Fertigungsmittel und Aufspannmittel einen hohen Anteil an den Fertigungskosten haben.

Wichtige Merkmale der Erfindung eines Verfahrens zur Herstellung von Getrieben, sind, dass verschiedene Getriebe-Varianten herstellbar sind, wobei bei mindestens zwei Varianten eine Radsitzbohrung mit einheitlichem Durchmesser für Zahnräder der Abtriebswelle unterschiedlicher Breite und/oder unterschiedlichen Teilkreisdurchmessers verwendet wird.

Somit ist ein einziges Aufspannmittel für die Bearbeitung der gebohrten Zahnräder verwendbar. Dies reduziert die Anschaffungskosten der Fertigungsanlage und somit die Herstellungskosten des gefertigten Getriebes.

Das beschriebene Verfahren ist besonders vorteilhaft zur Herstellung einer erfindungsgemäßen Getriebe-Baureihe geeignet.

Bei einer vorteilhaften Ausgestaltung werden Hohlwellen und Vollwellen als Abtriebswellen mit einem einheitlichen Durchmesser des Aufnahmebereichs für das aufgesteckte Zahnrad gefertigt. Somit ist auch für die Fertigung der Wellen ein einheitliches Fertigungsmittel verwendbar und/oder ein einheitlicher Fertigungsvorgang durchführbar.

Bei einer vorteilhaften Ausgestaltung werden eine Hohlwellenausführung und eine Vollwellenausführung eines Getriebes mit einem gleichen Abtriebsdrehmoment gefertigt, wobei eine einheitliche Passfeder in beiden Ausführungen in die Abtriebswelle eingebracht wird. Somit ist die Lagerhaltung für die Passfedern vereinfacht, da eine geringere Vielfalt von Passfedern vorgehalten werden muss.

Bei einer vorteilhaften Ausgestaltung werden jeweils zwei Varianten hergestellt, die sich durch den Achsabstand zwischen eintreibender Welle und Abtriebswelle unterscheiden, wobei die Getriebegehäuse der Varianten einen einheitlichen Querschnitt aufweisen, und wobei die Zahnräder der Abtriebswelle eine einheitliche Passfeder aufweisen und/oder eine einheitliche Radsitzbohrung aufweisen. Somit ist eine Getriebe-Baureihe mit einer feinen Abstufung der Abtriebsdrehmomente und der Übersetzungszahlen fertigbar bei möglichst geringer Vielfalt der Bauteile. Durch die bauteilarme Auslegung des Baukastens, aus dem die Varianten der Baureihe bildbar sind, sind die Kosten für Transport und Lagerung der Bauteile bis zur Endmontage in Nähe zum Einsatzort der jeweiligen Variante reduziert.

Bei einer vorteilhaften Ausgestaltung sind verschiedenen Getriebe-Varianten herstellbar, wobei unterschiedliche Zahnräder zur Herstellung der Verzahnung und/oder zur Endbearbeitung auf dieselbe Aufspannvorrichtung, insbesondere mit denselben Aufspannmitteln, montiert werden. Somit ist der Umfang des Maschinenparks und/oder der Werkzeuge, die zur Fertigung einer Baureihe mit feiner Drehmoment- und/oder Übersetzungszahlstufung notwendig sind, reduziert. Hierdurch sind die Herstellungskosten für die Varianten der Baureihe reduziert.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

### Bezugszeichenliste

- 1: Getriebe
- 2: Abtriebswelle
- 3: Zahnrad
- 4: Passfeder
- 20: Abtriebszapfen
- 21: Wellenschulter
- 22: Distanzhülse
- 23: Getriebewelle
- 24: Ritzel
- 25: Lagerinnenring
- 26: Pendelrollenlager
- 27: Distanzhülse
- 28: Lagerinnenring
- 29: Pendelrollenlager
- 30: Getriebe
- 31: Abtriebswelle
- 32: Zahnrad
- 33: Distanzhülse
- 34: Lagerinnenring
- 35: Zylinderrollenlager
- 36: Wellenabschnitt
- 37: Passfeder
- 38: Wellenschulter
- 39: Nutendbereich
- 40: Abtriebszapfen
- 41: Getriebe
- 42: Abtriebswelle
- 43: Hohlwellenbohrung
- 44: Hohlwellenbohrung
- 45: Distanzhülse
- 46: Zyünderrollenlager
- 47: Zahnrad
- 48: Passfeder
- 49: Wellenschulter
- 50: Wellenabschnitt
- 51: Nutendbereich
- 52: Wellendichtring
- 60: Abtriebswelle
- 61: Zahnrad
- 62: Passfeder
- 63: Wellennuttiefe
- 64: Nabennuttiefe
- 67: Zahnradsitzbohrung
- 70, 71, 72: Nutendbereich
- 73: Wellenabschnitt
- 74, 75: Passfedernut
- 80, 81, 82, 83, 84, 85: Zahnrad
- 86, 87, 88, 89, 90, 91: Abtriebswelle
- 92, 93, 94, 95, 96, 97: Wellenabschnitt
- 98, 99, 100: Passfeder
- 101, 102, 103: Verlinkung
- AH, BH, CH: Getriebe-Variante mit Hohlwelle
- AS, BS, CS: Getriebe-Variante mit Abtriebszapfen
- A1, A2, B1, B2, C1, C2, D1, D2, E1, E2: Getriebe-Variante
- a: Passfederhöhe
- b: Passfederbreite

Die Erfindung wird nun anhand von Abbildungen näher erläutern:
Es zeigt
   - Figur 1 ein Getriebe in Schnittansicht,
   - Figur 2 eine Detailansicht der Abtriebswelle aus Figur 1,
   - Figur 3 eine Schnittansicht einer Abtriebs-Getriebestufe,
   - Figur 4 eine Schnittansicht einer weiteren Abtriebs-Getriebestufe,
   - Figur 5 eine Schnittansicht einer weiteren Abtriebs-Getriebestufe,
   - Figur 6 eine schematische Darstellung einer erfindungsgemäßen Baureihe von Getrieben und
   - Figur 7 eine schematische Darstellung einer weiteren erfindungsgemäßen Baureihe von Getrieben.

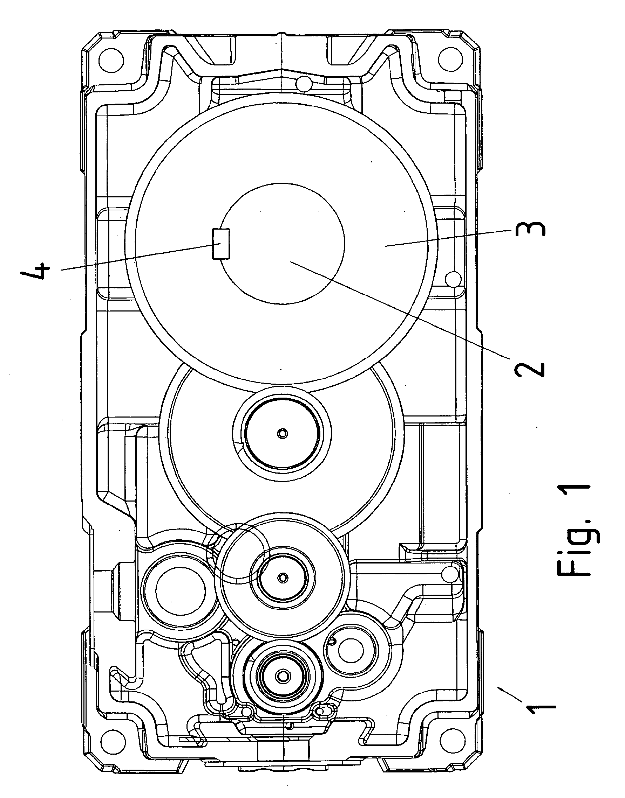

Figur 1 zeigt ein dreistufiges Getriebe 1. Auf der Welle mit dem größten Durchmesser, also der Abtriebswelle 2, ist ein Zahnrad 3 angeordnet. Abtriebswelle 2 und Zahnrad 3 sind durch eine Passfeder 4 formschlüssig verbunden.

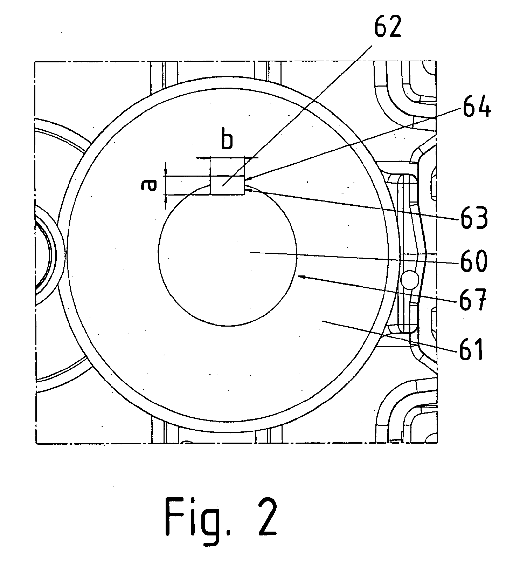

Figur 2 zeigt eine Detailansicht der Abtriebswelle 2 aus Figur 1. In die Abtriebswelle 2, 60 ist eine Nut eingebracht, in welche die Passfeder 63 eingepasst ist. Die Nut weist eine Wellenuttiefe 63 auf. Die Passfeder 63 ist quaderförmig ausgeführt und weist eine Passfederhöhe a und eine Passfederbreite b auf. Das Zahnrad 61 weist eine Zahnradsitzbohrung 67 auf, durch die die Abtriebswelle 60 gesteckt ist. In das Zahnrad 61 ist in der Zahnradsitzbohrung 67 eine Nabennut mit einer Nabennuttiefe 64 zur Aufnahme der Passfeder 63 eingebracht.

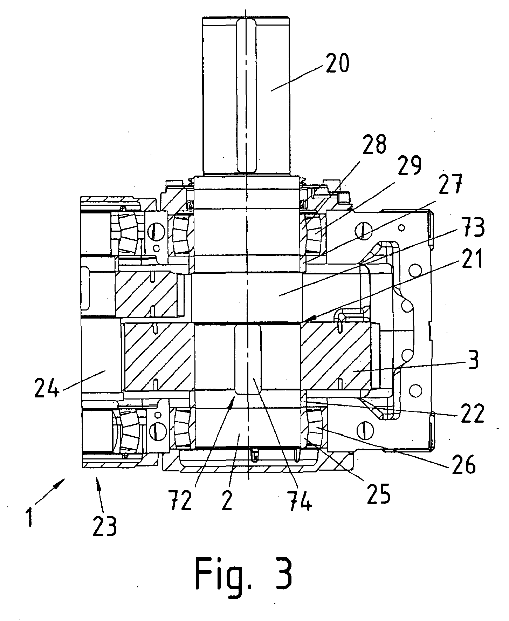

Figur 3 zeigt die Abtriebs-Getriebestufe des Getriebes aus Figur 1. Die Getriebestufe wird von der Abtriebswelle 2 und einer weiteren Getriebewelle 23, dem Zahnrad 3 und dem Ritzel 24, die miteinander kämmen, gebildet.

Die Abtriebswelle 2 ist als Vollwelle ausgebildet und weist einen Abtriebszapfen 20 auf.

An der Abtriebswelle 2 ist ein Wellenabschnitt 73 mit erhöhtem Durchmesser ausgebildet. Hierdurch wird eine Wellenschulter 21 geformt, an der das auf die Abtriebswelle 2 gesteckte Zahnrad 3 mit einer Seite festgelegt ist. Auf der anderen Seite des Zahnrads 3 ist eine Distanzhülse 22 angeordnet, die am Lagerinnenring 25 des Pendelrollenlagers 26 festgelegt ist. Somit ist das Zahnrad 3 beidseitig festgelegt.

Die Abtriebswelle 2 ist auf der anderen Seite in einem weiteren Pendelrollenlager 29 gelagert, und eine Distanzhülse 27 stellt einen festen Abstand zwischen dem Lagerinnenring 28 und dem Wellenabschnitt 73 ein.

In die Abtriebswelle 2 ist zur Aufnahme der Passfeder 4 des Zahnrades 3 eine Passfedernut 73 eingearbeitet. Diese Passfedernut 73 ist gefräst und weist eine rechteckige Form mit abgerundeten Kanten auf. Die abgerundeten Kanten sind jeweils aus Viertelkreisen gebildet. Auf einer Seite des Zahnrads 3 ragt der Nutendbereich 74 über die Nabe des Zahnrads 3 hinaus.

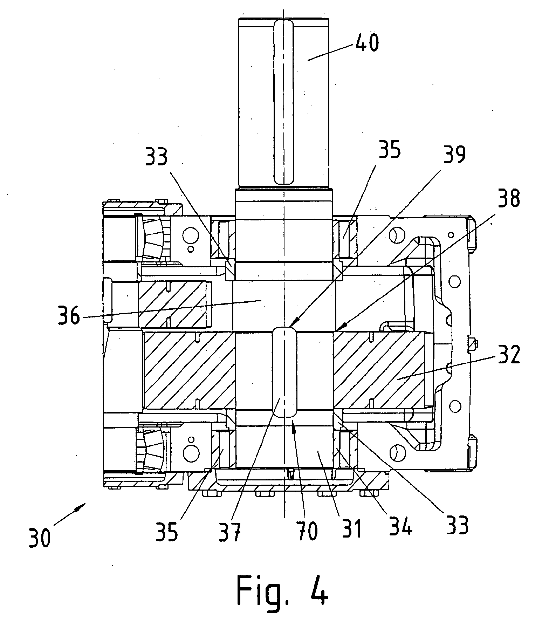

Figur 4 zeigt eine Schnittansicht einer weiteren Getriebeendstufe eines Getriebes 30 der Baureihe. Die gezeigte Variante ist für ein größeres Abtriebsmoment ausgelegt als die Variante nach Figur 3. Deshalb weist der Abtriebszapfen 40 der als Vollwelle ausgebildeten Abtriebswelle 31 einen größeren Durchmesser auf als der entsprechende Abtriebszapfen 20 in Figur 3.

An der Abtriebswelle 31 ist ein Wellenabschnitt 36 mit erhöhtem Durchmesser ausgebildet, an den auf einer Seite das Zahnrad 32 der Getriebeendstufe angrenzt. Das Zahnrad 43 ist somit an eine Wellenschulter 38 angelegt, die durch den Wellenabschnitt 36 gebildet ist. Die Abtriebswelle 31 mit dem Zahnrad 32 ist auf beiden Seiten mit Distanzhülsen 33 an Lagerinnenringen 34 von Zylinderrollenlagern 35 axial festgelegt.

Das Zahnrad 32 weist zu Aufnahme der Abtriebswelle 31 eine Zahnradsitzbohrung auf, deren Durchmesser gleich ist dem Durchmesser der Zahnradsitzbohrung des entsprechenden Zahnrades 3 aus Figur 3. Dementsprechend weisen auch die jeweiligen Aufnahmeabschnitte der Abtriebswellen 2, 31 einen identischen Durchmesser auf.

Da das Getriebe 30 in Figur 4 für ein größeres Abtriebsdrehmoment ausgelegt ist als das Getriebe 1 aus Figur 3, muss über die Passfeder des Zahnrades 32 eine größere Kraft übertragen werden. Um dennoch den gleichen Bohrungsdurchmesser für die Zahnradsitzbohrung wählen zu können und um gleichzeitig bei der Variante nach Figur 2 die Abtriebswelle 2 nicht unnötig groß zu dimensionieren, wird bei der Abtriebswelle 31 eine Passfeder eingesetzt, deren tragende Länge die gesamte Nabenbreite des Zahnrades 32 ausnutzt.

Die Passfeder ist quaderförmig. Zur Aufnahme der Passfeder wird eine rechteckige Passfedernut 37 mit abgerundeten Ecken in die Abtriebswelle 31 eingefräst.

Die Nutendbereiche 39, 70 ragen über die Position der Nabe des Zahnrades 32 hinaus, damit die Passfeder die gesamte Nabenbreite ausnutzen kann. Insbesondere sind die axial verlaufenden, geraden Kanten der Passfedernut 37 so lang ausgeführt, dass die Krümmungsmittelpunkte der jeweils viertelkreisförmig ausgeformten Abrundungen der Ecken des rechteckigen Grundrisses der Passfedernut 37 außerhalb oder zumindest auf der Grenzlinie der Nabe des Zahnrades 32 liegen.

Ein Nutendbereich 39 ragt in den Wellenabschnitt 36 mit erhöhtem Durchmesser hinein. Hier sind die Krümmungsmittelpunkte der zwei viertelkreisförmig ausgeformten Abrundungen der Ecken der Passfedernut 37 in den Wellenabschnitt 36 hinein verlegt. Der Abstand der Krümmungsmittelpunkte von der Begrenzung des Wellenabschnitts 36 und damit von der Zahnradnabe beträgt 3mm. Somit ist sichergestellt, dass die eingelegt Passfeder trotz einer axialen Positionierungstoleranz von 1 mm auf jeden Fall in den Wellenabschnitt 36 hineinragt, und es wird sicher vermieden, dass sich die Kerbwirkung aufgrund der Wellenschulter 38 des Wellenabschnitts 36 mit der Kerbwirkung des Passfederendes addiert.

Um das übertragbare Drehmoment zu erhöhen, ohne den Bohrungsdurchmesser es Zahnrades 32 erhöhen zu müssen, ist die Passfedernut zusätzlich 2mm tiefer ausgeführt als nach DIN 6885 Blatt1 Seite 3 vorgeschrieben. Somit ist die durch die Passfeder ausgeübte Flächenpressung in der Abtriebswelle 31 vermindert.

Um das übertragbare Drehmoment zu erhöhen, ohne den Bohrungsdurchmesser es Zahnrades 32 erhöhen zu müssen, ist eine Passfeder gewählt und also eine Passfedernut vorgesehen, die größer ist als eine Passfeder nach Vorgabe der DIN 6885. Insbesondere wird die nächstgrößere Passfeder nach DIN 6885 eingesetzt Für einen Wellendurchmesser zwischen 260mm und 290mm wird somit statt einer Passfeder mit dem vorgeschriebenen Querschnitt 63mmx32mm die nächstgrößere Passfeder mit dem Querschnitt 70mmx36mm eingesetzt, die nach Vorgabe erst für Wellendurchmesser zwischen 290mm und 330mm vorgesehen ist.

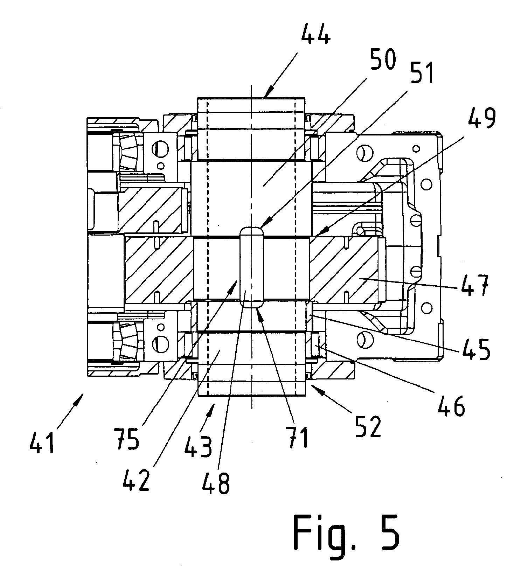

Figur 5 zeigt eine Schnittansicht einer weiteren Getriebeendstufe eines Getriebes 41 der Baureihe. Die gezeigte Variante ist für ein kleineres Abtriebsmoment ausgelegt als die Variante nach Figur 3. Die Abtriebswelle 42 ist als Hohlwelle ausgeführt und weist an beiden Enden Hohlwellenbohrungen 43, 44 auf.

Wegen der Hohlwellenausführung ist der Durchmesser der Abtriebswelle 42 größer als bei einer entsprechender Vollwellenausführung mit gleichem Abtriebsmoment.

Auf der Abtriebswelle 42 ist ein Zahnrad 47 angeordnet, das an der Wellenschulter 49 eines Wellenabschnitts 50 mit erhöhtem Durchmesser einseitig axial festgelegt ist. Eine Distanzhülse 45 legt das Zahnrad 47 auf seiner anderen Seite gegenüber einem Zylinderrollenlager fest.

Ein Wellendichtring 52 dichtet die Abtriebswelle 42 nach außen ab.

Das Zahnrad 47 ist mit einer Zahnradsitzbohrung ausgeführt, deren Durchmesser gleich ist dem Durchmesser der entsprechenden Bohrung des Zahnrads 3 aus Figur 3. Die übrigen Abmessungen des Zahnrads 47, beispielsweise Teilkreisdurchmesser, Zähnezahl, Modul, Verzahnungsbreite, sind von denen des Zahnrades 3 verschieden.

Um den Durchmesser der Zahnradsitzbohrung des Zahnrades 3 auch für das Zahnrad 47 und das für das Getriebe 41 vorgesehene Abtriebsmoment verwenden zu können, wird die Passfedernut 75 so dimensioniert, dass die eingelegte Passfeder 48 die gesamte Nabenbreite des Zahnrads 47 zur Kraftübertragung nutzt. Dementsprechend ragen die Nutendbereiche 51, 71 beidseitig über die Position der Nabe des Zahnrads 47 hinaus, wobei der Nutendbereich 51 soweit in den Wellenabschnitt 50 mit erhöhtem Durchmesser geführt ist, dass die eingelegte Passfeder über die Wellenschulter 49 hinaus in den Wellenabschnitt 50 ragt. Die Passfeder erstreckt sich axial 3mm außerhalb des Bereichs der Nabe des Zahnrads 47. Somit ist selbst bei einer axialen Positionierungstoleranz von 1 mm sichergestellt, dass das Ende der Passfeder nicht mit der Wellenschulter zusammenfällt.

Die Passfedernut ist 2mm tiefer ausgeführt als von der DIN 6885 vorgeschrieben, um ein erhöhtes Drehmoment bei gleicher Zahnradsitzbohrung zu ermöglichen. Bei Hohlwellenausführung hat sich ein Zuschlag von höchstens 2mm in der gesamten Baureihe als vorteilhaft erwiesen, ohne dass die Materialstabilität der Hohlwellen nennenswert beeinträchtigt ist. Durch die tiefere Wellennut und durch die Wahl einer Passfeder, deren Länge größer ist als die Nabenbreite des Zahnrads 47, ist es ausreichend, eine Passfeder zu wählen, deren Querschnitt eine Größe kleiner als die Vorgabe nach DIN 6885. Es wird also statt der für Wellendurchmesser zwischen 260mm und 290mm vorgegebenen Passfeder mit Querschnitt 63mmx32mm eine Passfeder mit Querschnitt 56mmx32mm eingesetzt, die für Wellendurchmesser zwischen 230mm und 260mm vorgeschrieben ist. Somit ist die Passfeder aus den Varianten, die sich von der Variante nach Figur 5 durch eine Vollwellenausführung der Abtriebswelle unterscheiden, wiederverwendbar.

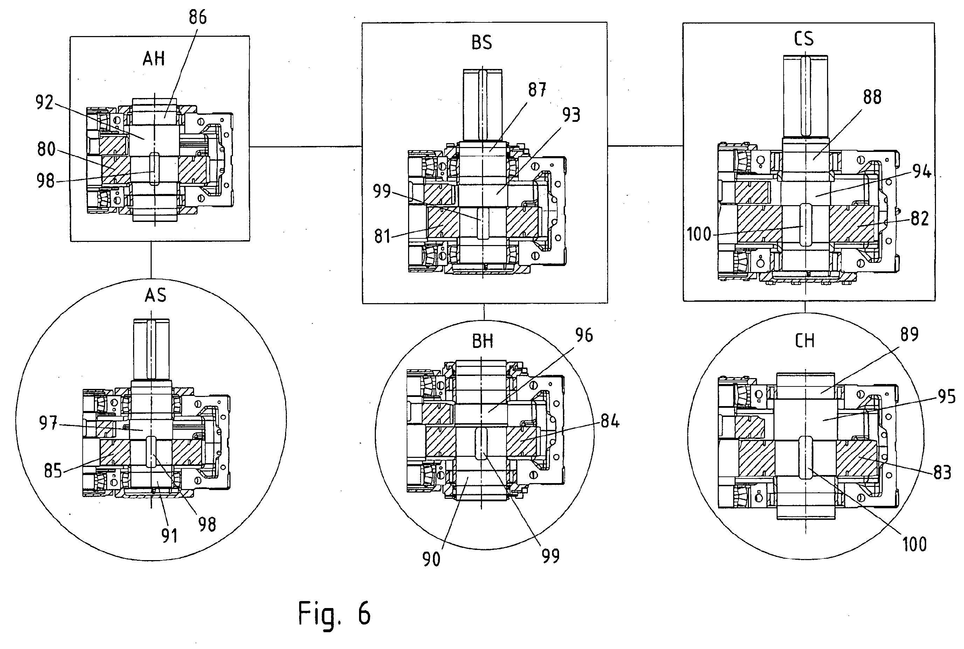

Figur 6 zeigt die Endstufe bei Varianten der Baureihe. Dargestellt sind Baugrößen A, B und C, die jeweils in Vollwellenausführung (S) und Hohlwellenausführung (H) ausgeführt sind. Es sind somit Varianten AS, AH, BS, BH, CS und CH ausgebildet. Weitere Varianten sind von der Baureihe umfasst. Die Variante AH wurde in Figur 5, die Variante BS in Figur 3, die Variante CS in Figur 4 dargestellt.

Innerhalb einer Baugröße sind gleiche Wellenabstände, insbesondere zwischen eintreibender Welle und Abtriebswelle, und gleiche Abmaße des Getriebegehäuses vorgesehen. Innerhalb einer Baugröße sind aber auch Varianten mit unterschiedlichen Übersetzungszahlen realisiert.

Die Varianten der Baureihe weisen Abtriebswellen 85, 87, 88, 89, 90, 91 auf, auf denen Zahnräder 81, 82, 83, 84, 85, 86 angeordnet sind, die an Wellenabschnitten mit erhöhten Durchmesser 92, 93, 94, 95, 96, 97 axial einseitig festgelegt sind.

Die Linien zwischen den Umrahmungen verdeutlichen die gemeinsamen Merkmale, mit denen die Baureihe gebildet wird.

Hierbei bedeutet eine Linie zwischen zwei rechteckigen Umrahmungen, also zwischen den Varianten AH und BS sowie BS und CS, dass die Zahnräder 80, 81, 82 der Abtriebswellen 86, 87, 88 einen gemeinsamen Radsitzbohrungsdurchmesser aufweisen. Bei den Varianten AH und CS wurde die Passfedernut 98 bzw. 100 so dimensioniert und platziert, dass die gesamte Breite der Nabe des Zahnrads 80 bzw. 82 zur Kraftübertragung durch die Passfeder nutzbar ist. Die Passfedernuten 98 bzw. 100 ragen hierzu in den Wellenbereich 82 bzw. 94 hinein, während die Passfedernut 99 bei der Variante BS nicht in den Wellenbereich 93 hineinragt.

Linien zwischen einer rechteckigen und einer kreisförmigen Umrahmung bedeuten, dass dieselbe Passfeder 98, 99 oder 100 verwendet wird.

Die Varianten AS, BH, CH teilen jeweils wieder mit weiteren Varianten einen Radsitzbohrungsdurchmesser. Zu den Varianten AH, BS, CS gibt es weitere Varianten mit gleichem Radsitzbohrungsdurchmesser, bei denen mindestens zwei räumliche Abmaße des jeweiligen Gehäuses gleich bleiben. Insbesondere sind die Höhe und Tiefe des Gehäuses, also Abmessungen quer zur Verbindungslinie von eintreibender Welle und Abtriebswelle.

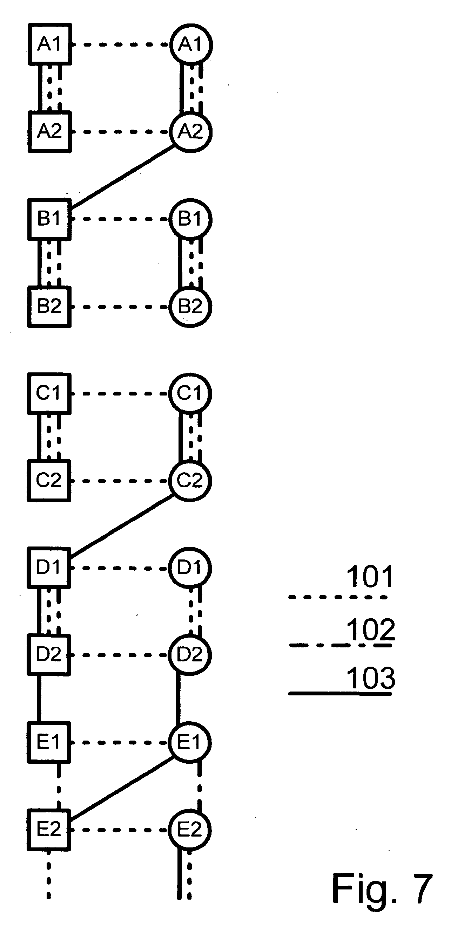

Figur 7 zeigt die Wiederverwendung von Teilen und Fertigungsschritten in der Baureihe.

Dargestellt sind Varianten A1, A2, B1, B2, usw., wobei jede Variante verschiedene Ausprägungen in Form vom unterschiedlichen Übersetzungszahlen umfasst. Alle Varianten sind dreistufige Getriebe. Von oben nach unten nimmt die Länge, insbesondere der Abstand zwischen Eintriebs- und Abtriebswelle, zu.

Ein Quadrat bedeutet eine Variante mit Vollwellenausführung der Abtriebswelle, ein Kreis eine Variante mit Hohlwellenausführung. Eine Verbindungslinie 101 zwischen zwei Varianten bedeutet dieselbe Passfeder in der Abtriebswelle, eine Verbindungslinie 102 bedeutet denselben Gehäusequerschnitt, also Höhe und Tiefe des Gehäuses, während eine Verbindungslinie 103 einen gemeinsamen Radsitzbohrungsdurchmesser anzeigt.

Durch die Gehäusedimensionierung sind Paare von Varianten geschaffen, die mit A1 und A2, B1 und B2 bezeichnet wurden. Bis auf die Gehäuselänge, also insbesondere den Abstand von Eintriebs- und Abtriebswelle, sind die Gehäuse bei diesen Paaren jeweils gleich.

Die zusammengehörigen Vollwellen- und Hohlwellenausführungen, jeweils mit den gleichen Buchstaben bezeichnet, weisen gleich große Gehäuse auf und unterscheiden sich nur durch die Bohrungen.

In den Hohlwellenausführungen sind die Passfedern jeweils tiefer als durch die DIN 6885 vorgegeben in die Welle eingebracht, um eine Wiederverwendung der Passfeder aus den jeweiligen Vollwellenausführungen zu ermöglichen, obwohl hier der Wellendurchmesser wegen der Hohlwellenbohrung größer ist. Weiter ragt bei diesen Varianten die Passfeder in die Wellenschulter der Abtriebswelle, um ein der Vollwelienvariante gleiches Abtriebsmoment bereitzustellen.

Bei wenigsten einer Vollwellenausführung eines jeden Paares ist die Passfeder zwischen ein und drei Millimeter tiefer in die Abtriebswelle eingebracht als gemäß Norm DIN 6885. Zudem ragt die Passfeder in die Wellenschulter der Abtriebswelle, an der das Zahnrad festgelegt ist. Somit ist bei der Variante die Radsitzbohrung der kürzeren Variante verwendbar, obwohl das Abtriebsmoment größer ist.

Die Baureihe nach Figur 7 zerfällt in zwei Blöcke, die nicht durch Linien verbunden sind. Der obere Block stellt den Standardbaustein der Baureihe dar, d.h. weitere Varianten der Baureihe sind nach dem Muster dieses Blocks verbunden, indem die Maßnahmen dieser Beschreibung hinsichtlich der Passfederdimensionierung und hinsichtlich der Wahl des Radsltzbohrungsdurchmessers befolgt werden.

Da eine Baureihe noch weitere Randbedingungen zu beachten hat, kann die Verlinkung zwischen den Varianten von dem Muster des Standardbausteins abweichen, wie dies der untere Block in Figur 7 demonstriert.

Charakteristisch bei der Baureihe ist, dass jeweils Hohlwellenvarianten A2, C2, E1 mit Vollwellenvarianten B1, D1, E2 einen gemeinsamen Radsitzbohrungsdurchmesser des Zahnrads der Abtriebswelle aufweisen. Charakteristisch für die Baureihe ist weiter die Gruppierung in Variantenpaar, äußerlich gekennzeichnet durch die Verwendung von Gehäusen gleicher Tiefe und Höhe, wobei die Varianten einen gemeinsamen Radsitzbohrungsdurchmesser und/oder eine gemeinsame Passfeder teilen.

Die Erfindung ist nicht auf dreistufige Getriebe beschränkt. Es sind ebenso einstufige, zweistufige und/oder vierstufige oder mehrstufige Getriebe in einer erfindungsgemäßen Baureihe bereitstellbar.

Die dargestellte Baureihe wird von einer größeren Baureihe umfasst, wobei die zusätzlichen Varianten sich von den dargestellten durch die Stufenzahl unterscheiden. Da die beschriebenen Merkmale sich auf die Abtriebswelle beziehen, kann die Beschreibung der erfindungsgemäßen Baureihe entsprechend übertragen werden.

Bei einem Ausführungsbeispiel einer Baureihe ist die Wiederverwendung von Radsitzbohrungen und/oder von Passfedern in der beschriebenen Art bei der eintreibenden Welle und/oder bei einer Zwischenwelle und/oder bei der Abtriebswelle und/oder innerhalb mehrerer Stufen verwirklicht. Der Achsabstand ist in diesem Beispiel nicht auf eintreibende Welle und Abtriebswelle bezogen, sondern auf den Achsabstand der betreffenden Stufe. Statt der eintreibenden Welle ist somit die Ritzelwelle zu nehmen, mit deren Ritzel dasjenige Verzahnteil kämmt, welches mit einer erfindungsgemäßen Radsitzbohrung versehen ist.

Bei einer Baureihe von Getrieben 1 sind Varianten mit unterschiedlichen Achsabständen ausgebildet, deren jeweils auf der abtreibenden Welle 2 angeordnete Zahnräder 3 eine gleiche Radsitzbohrung aufweisen.

## Patentansprüche

1. Getriebe-Baureihe,
umfassend eine erste Variante mit einer als Hohlwelle (50, 86, 89, 90) ausgebildeten Abtriebswelle (2)
und eine zweite Variante mit einer als Vollwelle (31, 87, 88, 91), ausgebildeten Abtriebswelle (2),
wobei der Bohrungsdurchmesser der Bohrung im Zahnrad (3, 47, 80, 83, 84) der Abtriebswelle (2) der ersten Variante gleich ist dem Bohrungsdurchmesser der Bohrung im Zahnrad (3, 32, 81, 82, 85) der Abtriebswelle (2) der zweiten Variante,
wobei die abtreibende Welle (2) jeder Variante einen Bereich mit erhöhtem Wellendurchmesser aufweist, der eine Wellenschulter (21, 38, 49) ausbildet, an der das Zahnrad (3) der abtreibenden Welle (2) festgelegt ist,
**dadurch gekennzeichnet, dass**
das Zahnrad (3, 47, 80, 83, 84) der ersten Variante für ein geringeres Nenn-Drehmoment ausgelegt ist als das Zahnrad (3, 32, 81, 82, 85) der zweiten Variante,
wobei bei der ersten Variante die tragende Länge einer Passfeder (4) des Zahnrades (3) der abtreibenden Welle kleiner ist als die Nabenbreite des Zahnrades (3)
und
bei der zweiten Variante die tragende Länge einer Passfeder (4) des Zahnrades (3) der abtreibenden Welle (2) gleich ist der Nabenbreites des Zahnrades (3),
wobei bei der zweiten Variante ein Endbereich (51) der Passfedernut (74, 75) des Zahnrades (3) in die Wellenschulter (21, 38, 49) hineinragt.

2. Getriebe-Baureihe,
umfassend eine erste Variante mit einer als Hohlwelle (50, 86, 89, 90) ausgebildeten Abtriebswelle (2)
und eine zweite Variante mit einer als Vollwelle (31, 87, 88, 91), ausgebildeten Abtriebswelle (2),
wobei der Bohrungsdurchmesser der Bohrung im Zahnrad (3, 47, 80, 83, 84) der Abtriebswelle (2) der ersten Variante gleich ist dem Bohrungsdurchmesser der Bohrung im Zahnrad (3, 32, 81, 82, 85) der Abtriebswelle (2) der zweiten Variante,
**dadurch gekennzeichnet, dass**
das Zahnrad (3, 47, 80, 83, 84) der ersten Variante für ein geringeres Nenn-Drehmoment ausgelegt ist als das Zahnrad (3, 32, 81, 82, 85) der zweiten Variante,
wobei die Verzahnungsbreite des Zahnrads (3, 47, 80, 83, 84) der ersten Variante kleiner ist als die Verzahnungsbreite des Zahnrads (3, 32, 81, 82, 85) der zweiten Variante.

3. Getriebe-Baureihe,
umfassend eine erste Variante mit einem ersten Abstand zwischen eintreibender Welle und Abtriebswelle (2),
umfassend eine zweite Variante mit einem zweiten Abstand zwischen eintreibender Welle und Abtriebswelle (2),
wobei der zweite Abstand größer als der erste Abstand ist
und der Bohrungsdurchmesser der Bohrung im Zahnrad (3) der Abtriebswelle (2) der ersten Variante gleich ist dem Bohrungsdurchmesser der Bohrung im Zahnrad (3) der Abtriebswelle (2) der zweiten Variante,
**dadurch gekennzeichnet, dass**
bei der ersten Variante die tragende Länge der Passfeder (4) des Zahnrades (3) der abtreibenden Welle kleiner ist als die Nabenbreite des Zahnrades (3)
und
bei der zweiten Variante die tragende Länge der Passfeder (4) des Zahnrades (3) der abtreibenden Welle (2) gleich ist der Nabenbreites des Zahnrades (3),
wobei bei der zweiten Variante die Länge der Passfeder (4) größer ist als die Nabenbreite des Zahnrades (2).

4. Getriebe-Baureihe nach einem der Ansprüche 1 bis 3,
**dadurch gekennzeichnet, dass**
das Zahnrad (3) der ersten Variante für ein geringeres Nenn-Drehmoment ausgelegt ist als das Zahnrad (3) der zweiten Variante.
und/oder
dass die Verzahnungsbreite des Zahnrads (3) der ersten Variante kleiner ist als die Verzahnungsbreite des Zahnrads (3) der zweiten Variante.
und/oder
dass bei der ersten Variante die tragende Länge der Passfeder (4) des Zahnrades (3) der abtreibenden Welle (2) kleiner ist als die Nabenbreite des Zahnrades (3)
und
bei der zweiten Variante die tragende Länge der Passfeder (4) des Zahnrades (3) der abtreibenden Welle (2) gleich ist der Nabenbreites des Zahnrades (3),
insbesondere wobei die Länge der Passfeder (4) größer, insbesondere mindestens zwei Millimeter oder sogar wenigstens drei Millimeter größer, ist als die Nabenbreites des Zahnrades (3)
und/oder
dass die abtreibende Welle (2) der ersten Variante eine Hohlwelle (50, 86, 89, 90) ist und die abtreibende Welle (2) der zweiten Variante eine Vollwelle (31, 87, 88, 91) ist.

5. Getriebe-Baureihe nach einem der Ansprüche 1 bis 4,
**dadurch gekennzeichnet, dass**
bei mindestens einer Variante, insbesondere der zweiten Variante, der Querschnitt der Passfeder (4) des Zahnrades (3) der abtreibenden Welle (2) größer als die Vorgabe gemäß DIN 6885 gewählt ist
und/oder
bei mindestens einer Variante die Wellennuttiefe (63) der Passfedernut (74, 75) des Zahnrades (3) der abtreibenden Welle (2) größer als die Vorgabe gemäß DIN 6885 gewählt ist
und/oder
bei mindestens einer Variante die Wellennuttiefe (63) der Passfedernut (74, 75) des Zahnrades (3) der abtreibenden Welle zwei Millimeter größer als die Vorgabe gemäß DIN 6885 gewählt ist
und/oder
bei mindestens einer Variante die abtreibende Welle (2) eine Vollwelle ist und die Wellennuttiefe (63) der Passfedernut (74, 75) des Zahnrades (3) der abtreibenden Welle (2) drei Millimeter größer als die Vorgabe gemäß DIN 6885 gewählt ist.

6. Getriebe-Baureihe nach einem der Ansprüche 1 bis 5,
**dadurch gekennzeichnet, dass**
der Endbereich (51) der Passfedernut (74, 75) einen gebogenen Kantenabschnitt aufweist, dessen Krümmungsmittelpunkt im Inneren des Bereichs mit erhöhtem Wellendurchmesser, insbesondere mindestens zwei Millimeter von der Bereichsgrenze entfernt, liegt.

7. Getriebe-Baureihe nach einem der Ansprüche 1 bis 6,
**dadurch gekennzeichnet, dass**
die Passfedernut (74, 75) oder die eingelegte Passfeder (4) in der abtreibenden Welle (2) geradstirnig ausgeführt ist
und/oder
die abtreibende Welle (2) jeder Variante einen Bereich mit erhöhtem Wellendurchmesser aufweist, der eine Wellenschulter (21, 38, 49) ausbildet, an der das Zahnrad der abtreibenden Welle festgelegt ist,
wobei die in die Passfedernut (74, 75) eingelegte Passfeder (4) des Zahnrades in die Wellenschulter (21, 38, 49) hineinragt.

8. Getriebe-Baureihe nach einem der Ansprüche 1 bis 7,
**dadurch gekennzeichnet, dass**
eine dritte Variante mit dem zweiten Abstand zwischen eintreibender Welle und Abtriebswelle (2) ausgebildet ist,
wobei das Zahnrad (3) der abtreibenden Welle (2) einen größeren Bohrungsdurchmesser aufweist als das Zahnrad (3) der abtreibenden Welle (2) der zweiten Variante und die Passfeder (4) des Zahnrades (3) der abtreibenden Welle (2) der dritten Variante gleich ist der Passfeder (4) des Zahnrades (3) der abtreibenden Welle (2) der zweiten Variante.

9. Getriebe-Baureihe nach einem der Ansprüche 1 bis 8.
**dadurch gekennzeichnet, dass**
die abtreibende Welle (2) der zweiten Variante eine Vollwelle (31, 87, 88, 919 ist und die abtreibende Welle (2) der dritten Variante eine Hohlwelle (50, 86, 89, 90) ist,
wobei die Wellennuttiefe (63) der Passfedernut (74, 75) der abtreibenden Welle (2) der dritten Variante zwei Millimeter größer ist als die Vorgabe nach DIN 6885 für den Wellendurchmesser
und/oder
dass die abtreibende Welle (2) einer Variante eine Hohlwelle (50, 86, 89, 90) ist,
wobei die Passfeder (4) der Abtriebswelle (2) einen geringeren Querschnitt aufweist als die Vorgabe gemäß DIN 6885 für den Wellendurchmesser, insbesondere wobei der Querschnitt eine Stufe kleiner ist als die Vorgabe gemäß DIN 6885 für den Wellendurchmesser,
und wobei die Wellennuttiefe (63) der Passfedernut (74, 75) in der Abtriebswelle (2) größer ist, insbesondere zwei Millimeter größer ist, als die Vorgabe gemäß DIN 6885 für den Wellendurchmesser.

10. Getriebe-Baureihe nach einem der Ansprüche 1 bis 9,
**dadurch gekennzeichnet, dass**
zweistufige und dreistufige Varianten umfasst sind
und/oder
dreistufige und vierstufige und/oder mehrstufige Varianten umfasst sind.
und/oder
statt auf die Abtriebswelle (2) die Merkmale der Ansprüche auf eine andere Welle, beispielsweise die eintreibende Welle oder auf eine Zwischenwelle, bezogen sind.

11. Getriebe-Baureihe nach einem der Ansprüche 1 bis 10,
**dadurch gekennzeichnet, dass**
die abtreibenden Wellen (2) der Varianten für ein Drehmoment größer als 10 kNm, insbesondere größer als 50 kNm, ausgelegt sind
und/oder
die Varianten jeweils eine Gesamtmasse von mindestens 500kg, insbesondere 1t aufweisen und/oder
bei jeder Variante die Bohrung im Zahnrad (3) einen Durchmesser von mindestens 100mm, insbesondere von mindestens 190mm, aufweist
und/oder
bei jeder Variante das Zahnrad (3) eine Breite, insbesondere Verzahnungsbreite, vom mindestens 100 mm aufweist
und/oder
bei jeder Variante der Achsabstand mindestens 300 mm beträgt.

12. Verfahren zur Herstellung von Getrieben,
**dadurch gekennzeichnet, dass**
verschiedenen Getriebe-Varianten herstellbar sind, insbesondere aus einem Baukasten, wobei bei mindestens zwei Getriebe-Varianten eine Radsitzbohrung mit einheitlichem Durchmesser für Zahnräder (3) der Abtriebswelle (2) unterschiedlicher Breite und/oder unterschiedlichen Teilkreisdurchmessers verwendet wird.

13. Verfahren zur Herstellung von Getrieben nach Anspruch 12,
**dadurch gekennzeichnet, dass**
Hohlwellen (50, 86, 89, 90) und Vollwellen (31, 87, 88, 91) als Abtriebswellen (2) mit einem einheitlichen Durchmesser des Aufnahmebereichs für das aufgesteckte Zahnrad (3) gefertigt werden.

14. Verfahren zur Herstellung von Getrieben nach Anspruch 12 oder 13,
**dadurch gekennzeichnet, dass**
eine Hohlwellenausführung und eine Vollwellenausführung eines Getriebes (1) mit einem Abtriebsdrehmoment gefertigt werden,
wobei eine einheitliche Passfeder (4) in beiden Ausführungen in die Abtriebswelle (2) eingebracht wird
und/oder
jeweils zwei Getriebe-Varianten hergestellt werden, die sich durch den Achsabstand zwischen eintreibender Welle und Abtriebswelle unterscheiden,
wobei die Getriebegehäuse der Getriebe-Varianten einen einheitlichen Querschnitt aufweisen, wobei der Querschnitt durch die Höhe und Tiefe des Gehäuses gegeben ist, während die Gehäuselänge den Abstand von Eintriebs- und Abtriebswelle umfasst,
und wobei die Zahnräder der Abtriebswelle eine einheitliche Passfeder aufweisen und/oder eine einheitliche Radsitzbohrung aufweisen
und/oder
verschiedenen Getriebe-Varianten herstellbar sind,
wobei unterschiedliche Zahnräder (3) zur Herstellung der Verzahnung und/oder zur Endbearbeitung auf dieselbe Aufspannvorrichtung, insbesondere mit denselben Aufspannmitteln, montiert werden.

15. Verfahren zur Herstellung von Getrieben, Insbesondere nach einem der Ansprüche 12 bis 14,
**dadurch gekennzeichnet, dass**
eine Getriebe-Baureihe nach einem der Ansprüche 1 bis 11 hergestellt wird.

## Claims

1. Transmission series, comprising a first variant with an output shaft (2) formed as a hollow shaft (50, 86, 89, 90) and a second variant with an output shaft (2) formed as a solid shaft (31, 87, 88, 91), wherein the bore diameter of the bore in the gear (3, 47, 80, 83, 84) of the output shaft (2) of the first variant is the same as the bore diameter of the bore in the gear (3, 32, 81, 82, 85) of the output shaft (2) of the second variant, wherein the output shaft (2) of each variant has a region of increased shaft diameter that forms a shaft shoulder (21, 38, 49) on which the gear (3) of the output shaft (2) is secured,
**characterised in that** the gear (3, 47, 80, 83, 84) of the first variant is designed for a lower rated torque than the gear (3, 32, 81, 82, 85) of the second variant, wherein in the first variant the supporting length of a feather key (4) of the gear (3) of the output shaft is smaller than the hub width of the gear (3) and in the second variant the supporting length of a feather key (4) of the gear (3) of the output shaft (2) is the same as the hub width of the gear (3), wherein in the second variant an end region (51) of the feather key groove (74, 75) of the gear (3) projects into the shaft shoulder (21, 38, 49).

2. Transmission series, comprising a first variant with an output shaft (2) formed as a hollow shaft (50, 86, 89, 90) and a second variant with an output shaft (2) formed as a solid shaft (31, 87, 88, 91), wherein the bore diameter of the bore in the gear (3, 47, 80, 83, 84) of the output shaft (2) of the first variant is the same as the bore diameter of the bore in the gear (3, 32, 81, 82, 85) of the output shaft (2) of the second variant,
**characterised in that** the gear (3, 47, 80, 83, 84) of the first variant is designed for a lower rated torque than the gear (3, 32, 81, 82, 85) of the second variant, wherein the gearing width of the gear (3, 47, 80, 83, 84) of the first variant is smaller than the gearing width of the gear (3, 32, 81, 82, 85) of the second variant.

3. Transmission series, comprising a first variant with a first spacing between the driving shaft and output shaft (2), comprising a second variant with a second spacing between the driving shaft and output shaft (2), wherein the second spacing is greater than the first spacing and the bore diameter of the bore in the gear (3) of the output shaft (2) of the first variant is the same as the bore diameter of the bore in the gear (3) of the output shaft (2) of the second variant,
**characterised in that** in the first variant the supporting length of the feather key (4) of the gear (3) of the output shaft is smaller than the hub width of the gear (3) and in the second variant the supporting length of the feather key (4) of the gear (3) of the output shaft (2) is the same as the hub width of the gear (3), wherein in the second variant the length of the feather key (4) is greater than the hub width of the gear (2).

4. Transmission series according to one of claims 1 to 3,
**characterised in that** the gear (3) of the first variant is designed for a lower rated torque than the gear (3) of the second variant, and/or that the gearing width of the gear (3) of the first variant is smaller than the gearing width of the gear (3) of the second variant, and/or that in the first variant the supporting length of the feather key (4) of the gear (3) of the output shaft (2) is less than the hub width of the gear (3), and in the second variant the supporting length of the feather key (4) of the gear (3) of the output shaft (2) is the same as the hub width of the gear (3), in particular wherein the length of the feather key (4) is larger, in particular at least 2 millimetres or even at least 3 millimetres larger, than the hub width of the gear (3), and/or that the output shaft (2) of the first variant is a hollow shaft (50, 86, 89, 90) and the output shaft (2) of the second variant is a solid shaft (31, 87, 88, 91).

5. Transmission series according to one of claims 1 to 4,
**characterised in that** in at least one variant, in particular the second variant, the cross section of the feather key (4) of the gear (3) of the output shaft (2) is chosen to be larger than the specified value according to DIN 6885 and/or in at least one variant the shaft groove depth (63) of the feather key groove (74, 75) of the gear (3) of the output shaft (2) is chosen to be greater than the specified value according to DIN 6885, and/or in at least one variant the shaft groove depth (63) of the feather key groove (74, 75) of the gear (3) of the output shaft is chosen to be 2 millimetres larger than the specified value according to DIN 6885 and/or in at least one variant the output shaft (2) is a solid circular shaft and the shaft groove depth (63) of the feather key (74, 75) of the gear (3) of the output shaft (2) is chosen to be 3 millimetres larger than the specified value according to DIN 6885.

6. Transmission series according to one of claims 1 to 5,
**characterised in that** the end region (51) of the feather key groove (74, 75) has a curved edge section whose centre of curvature lies inside the region of larger shaft diameter, in particular at least 2 millimetres from the boundary of the region.

7. Transmission series according to one of claims 1 to 6,
**characterised in that** the feather key groove (74, 75) or the inserted feather key (4) in the output shaft (2) is designed as a square key and/or the output shaft (2) of each variant has a region of increased shaft diameter that forms a shaft shoulder (21, 38, 49) on which the gear of the output shaft is fixed, wherein the feather key (4) of the gear inserted into the feather key groove (74, 75) projects into the shaft shoulder (21, 38, 49).

8. Transmission series according to one of claims 1 to 7,
**characterised in that** a third variant is formed with the second spacing between the driving shaft and output shaft (2), wherein the gear (3) of the output shaft (2) has a larger bore diameter than the gear (3) of the output shaft (2) of the second variant and the feather key (4) of the gear (3) of the output shaft (2) of the third variant is the same as the feather key (4) of the gear (3) of the output shaft (2) of the second variant.

9. Transmission series according to one of claims 1 to 8,
**characterised in that** the output shaft (2) of the second variant is a solid shaft (31, 87, 88, 91) and the output shaft (2) of the third variant is a hollow shaft (50, 86, 89, 90), wherein the shaft groove depth (63) of the feather key groove (74, 75) of the output shaft (2) of the third variant is 2 millimetres larger than the specified value according to DIN 6885 for the shaft diameter, and/or that the output shaft (2) of a variant is a hollow shaft (50, 86, 89, 90), wherein the feather key (4) of the output shaft (2) has a smaller cross section than the specified value according to DIN 6885 for the shaft diameter, in particular wherein the cross section is one stage smaller than the specified value according to DIN 6885 for the shaft diameter, and wherein the shaft groove depth (63) of the feather key groove (74, 75) in the output shaft (2) is larger, in particular 2 millimetres larger, than the specified value according to DIN 6885 for the shaft diameter.

10. Transmission series according to one of claims 1 to 9,
**characterised in that** two-stage and three-stage variants are included and/or three-stage and four-stage and/or multi-stage variants are included, and/or instead of relating to the output shaft (2) the features of the claims relate to another shaft, for example the driving shaft or an intermediate shaft.

11. Transmission series according to one of claims 1 to 10,
**characterised in that** the output shafts (2) of the variants are designed for a torque greater than 10 kNm, in particular greater than 50 kNm, and/or the variants respectively have a total mass of at least 500 kg, in particular 1 tonne, and/or in each variant the bore in the gear (3) has a diameter of at least 100 mm, in particular at least 190 mm, and/or in each variant the gear (3) has a width, in particular a gearing width, of at least 100 mm, and/or in each variant the axial spacing is at least 300 mm.

12. Method for producing transmissions,
**characterised in that** various transmission variants can be produced, in particular based on a modular principle, wherein in at least two transmission variants a gear seat bore of uniform diameter is used for gears (3) of the output shaft (2) of different width and/or different pitch circle diameter.

13. Method for producing transmissions according to claim 12,
**characterised in that** hollow shafts (50, 86, 89, 90) and solid shafts (31, 87, 88, 91) are produced as output shafts (2) with a uniform diameter of the take-up region for the slipped-on gear (3).

14. Method for producing transmissions according to claim 12 or 13,
**characterised in that** a hollow shaft embodiment and a solid shaft embodiment of a transmission (1) with an output torque are produced, wherein a uniform feather key (4) is introduced in both embodiments into the output shaft (2), and/or respectively two transmission variants are produced, which differ by the axial spacing between the driving shaft and output shaft, wherein the transmission housings of the transmission variants have a uniform cross section, wherein the cross section is given by the height and depth of the housing, while the housing length includes the distance between the driving shaft and output shaft, and wherein the gears of the output shaft have a uniform feather key and/or have a uniform gear seat bore, and/or various transmission variants can be produced, wherein different gears (3) are installed for producing the toothing and/or the final machining on the same clamping device, in particular with the same clamping means.

15. Method for producing transmissions, in particular according to one of claims 12 to 14, **characterised in that** a transmission series according to one of claims 1 to 11 is produced.

## Revendications

1. Gamme de transmissions,
comprenant une première variante avec un arbre de sortie (2) réalisé sous la forme d'un arbre creux (50, 86, 89, 90)
et une deuxième variante avec un arbre de sortie (2) réalisé sous la forme d'un arbre plein (31, 87, 88, 91),
le diamètre d'alésage de l'alésage dans la roue dentée (3, 47, 80, 83, 84) de l'arbre de sortie (2) de la première variante étant égal au diamètre d'alésage de l'alésage dans la roue dentée (3, 32, 81, 82, 85) de l'arbre de sortie (2) de la deuxième variante,
l'arbre de sortie (2) de chaque variante présentant une zone de diamètre d'arbre augmenté qui forme un épaulement d'arbre (21, 38, 49) auquel la roue dentée (3) de l'arbre de sortie (2) est fixée,
**caractérisée en ce que**
la roue dentée (3, 47, 80, 83, 84) de la première variante est dimensionnée pour un couple nominal plus faible que la roue dentée (3, 32, 81, 82, 85) de la deuxième variante,
sachant que dans la première variante, la longueur portante d'une clavette (4) de la roue dentée (3) de l'arbre de sortie est plus petite que la largeur de moyeu de la roue dentée (3)
et
que, dans la deuxième variante, la longueur portante d'une clavette (4) de la roue dentée (3) de l'arbre de sortie (2) est égale à la largeur de moyeu de la roue dentée (3),
et, dans la deuxième variante, une zone terminale (51) de la rainure de clavette (74, 75) de la roue dentée (3) fait saillie dans l'épaulement d'arbre (21, 38, 49).

2. Gamme de transmissions,
comprenant une première variante avec un arbre de sortie (2) réalisé sous la forme d'un arbre creux (50, 86, 89, 90)
et une deuxième variante avec un arbre de sortie (2) réalisé sous la forme d'un arbre plein (31, 87, 88, 91),
le diamètre d'alésage de l'alésage dans la roue dentée (3, 47, 80, 83, 84) de l'arbre de sortie (2) de la première variante étant égal au diamètre d'alésage de l'alésage dans la roue dentée (3, 32, 81, 82, 85) de l'arbre de sortie (2) de la deuxième variante,
**caractérisée en ce que**
la roue dentée (3, 47, 80, 83, 84) de la première variante est dimensionnée pour un couple nominal plus faible que la roue dentée (3, 32, 81, 82, 85) de la deuxième variante,
la largeur de denture de la roue dentée (3, 47, 80, 83, 84) de la première variante étant plus petite que la largeur de denture de la roue dentée (3, 32, 81, 82, 85) de la deuxième variante.

3. Gamme de transmissions,
comprenant une première variante avec une première distance entre arbre d'entrée et arbre de sortie (2),
comprenant une deuxième variante avec une deuxième distance entre arbre d'entrée et arbre de sortie (2),
la deuxième distance étant plus grande que la première distance
et le diamètre d'alésage de l'alésage dans la roue dentée (3) de l'arbre de sortie (2) de la première variante étant égal au diamètre d'alésage de l'alésage dans la roue dentée (3) de l'arbre de sortie (2) de la deuxième variante,
**caractérisée en ce que**
dans la première variante, la longueur portante de la clavette (4) de la roue dentée (3) de l'arbre de sortie est plus petite que la largeur de moyeu de la roue dentée (3)
et
dans la deuxième variante, la longueur portante de la clavette (4) de la roue dentée (3) de l'arbre de sortie (2) est égale à la largeur de moyeu de la roue dentée (3), et, dans la deuxième variante, la longueur de la clavette (4) est plus grande que la largeur de moyeu de la roue dentée (2).

4. Gamme de transmissions selon l'une des revendications 1 à 3,
**caractérisée en ce que**
la roue dentée (3) de la première variante est dimensionnée pour un couple nominal plus faible que la roue dentée (3) de la deuxième variante
et/ou
que la largeur de denture de la roue dentée (3) de la première variante est plus petite que la largeur de denture de la roue dentée (3) de la deuxième variante et/ou
que, dans la première variante, la longueur portante de la clavette (4) de la roue dentée (3) de l'arbre de sortie (2) est plus petite que la largeur de moyeu de la roue dentée (3)
et
dans la deuxième variante, la longueur portante de la clavette (4) de la roue dentée (3) de l'arbre de sortie (2) est égale à la largeur de moyeu de la roue dentée (3),
en particulier la longueur de la clavette (4) étant plus grande, en particulier plus grande d'au moins deux millimètres ou même d'au moins trois millimètres que la largeur de moyeu de la roue dentée (3)
et/ou
que l'arbre de sortie (2) de la première variante est un arbre creux (50, 86, 89, 90) et l'arbre de sortie (2) de la deuxième variante est un arbre plein (31, 87, 88, 91).

5. Gamme de transmissions selon l'une des revendications 1 à 4,
**caractérisée en ce que**
dans au moins une variante, en particulier la deuxième variante, la section transversale de la clavette (4) de la roue dentée (3) de l'arbre de sortie (2) est choisie plus grande que la spécification selon DIN 6885
et/ou
dans au moins une variante, la profondeur de rainure d'arbre (63) de la rainure de clavette (74, 75) de la roue dentée (3) de l'arbre de sortie (2) est choisie plus grande que la spécification selon DIN 6885
et/ou
dans au moins une variante, la profondeur de rainure d'arbre (63) de la rainure de clavette (74, 75) de la roue dentée (3) de l'arbre de sortie est choisie plus grande de deux millimètres que la spécification selon DIN 6885
et/ou
dans au moins une variante, l'arbre de sortie (2) est un arbre plein et la profondeur de rainure d'arbre (63) de la rainure de clavette (74, 75) de la roue dentée (3) de l'arbre de sortie (2) est choisie plus grande de trois millimètres que la spécification selon DIN 6885.

6. Gamme de transmissions selon l'une des revendications 1 à 5,
**caractérisée en ce que**
la zone terminale (51) de la rainure de clavette (74, 75) présente une partie de bord courbe dont le centre de courbure se trouve à l'intérieur de la zone de diamètre d'arbre augmenté, en particulier est distant d'au moins deux millimètres de la limite de la zone.

7. Gamme de transmissions selon l'une des revendications 1 à 6,
**caractérisée en ce que**
la rainure de clavette (74, 75) ou la clavette (4) engagée dans l'arbre de sortie (2) est réalisée à bout droit
et/ou
l'arbre de sortie (2) de chaque variante présente une zone de diamètre d'arbre augmenté qui forme un épaulement d'arbre (21, 38, 49) auquel la roue dentée de l'arbre de sortie est fixée,
la clavette (4) de la roue dentée engagée dans la rainure de clavette (74, 75) faisant saillie dans l'épaulement d'arbre (21, 38, 49).

8. Gamme de transmissions selon l'une des revendications 1 à 7,
**caractérisée en ce que**
une troisième variante avec la deuxième distance entre arbre d'entrée et arbre de sortie (2) est formée,
la roue dentée (3) de l'arbre de sortie (2) présentant un plus grand diamètre d'alésage que la roue dentée (3) de l'arbre de sortie (2) de la deuxième variante et la clavette (4) de la roue dentée (3) de l'arbre de sortie (2) de la troisième variante étant identique à la clavette (4) de la roue dentée (3) de l'arbre de sortie (2) de la deuxième variante.

9. Gamme de transmissions selon l'une des revendications 1 à 8,
**caractérisée en ce que**
l'arbre de sortie (2) de la deuxième variante est un arbre plein (31, 87, 88, 91) et l'arbre de sortie (2) de la troisième variante un arbre creux (50, 86, 89, 90),
la profondeur de rainure d'arbre (63) de la rainure de clavette (74, 75) de l'arbre de sortie (2) de la troisième variante étant plus grande de deux millimètres que la spécification selon DIN 6885 pour le diamètre d'arbre
et/ou
que l'arbre de sortie (2) d'une variante est un arbre creux (50, 86, 89, 90), la clavette (4) de l'arbre de sortie (2) présentant une section transversale plus faible que la spécification selon DIN 6885 pour le diamètre d'arbre, en particulier la section transversale étant plus petite d'un échelon que la spécification selon DIN 6885 pour le diamètre d'arbre,
et la profondeur de rainure d'arbre (63) de la rainure de clavette (74, 75) dans l'arbre de sortie (2) étant plus grande, en particulier plus grande de deux millimètres, que la spécification selon DIN 6885 pour le diamètre d'arbre.

10. Gamme de transmissions selon l'une des revendications 1 à 9,
**caractérisée en ce que**
la gamme comprend des variantes à deux étages et à trois étages
et/ou
la gamme comprend des variantes à trois étages et à quatre étages et/ou à plusieurs étages
et/ou
qu'à la place de l'arbre de sortie (2), les caractéristiques des revendications se rapportent à un autre arbre, par exemple à l'arbre d'entrée ou à un arbre intermédiaire.

11. Gamme de transmissions selon l'une des revendications 1 à 10,
**caractérisée en ce que**
les arbres de sortie (2) des variantes sont dimensionnés pour un couple supérieur à 10 kNm, en particulier supérieur à 50 kNm,
et/ou
les variantes présentent chacune une masse totale d'au moins 500 kg, en particulier de 1 t,
et/ou
dans chaque variante, l'alésage dans la roue dentée (3) présente un diamètre d'au moins 100 mm, en particulier d'au moins 190 mm,
et/ou
dans chaque variante, la roue dentée (3) présente une largeur, en particulier une largeur de denture, d'au moins 100 mm
et/ou
dans chaque variante, l'entraxe est d'au moins 300 mm.

12. Procédé de fabrication de transmissions,
**caractérisé en ce que**
différentes variantes de transmissions peuvent être fabriquées, en particulier à partir d'un jeu de construction, sachant que dans au moins deux variantes de transmissions, on utilise un alésage de siège de roue de diamètre uniforme pour des roues dentées (3) de l'arbre de sortie (2) de largeur différente et/ou de diamètre de cercle primitif différent.

13. Procédé de fabrication de transmissions selon la revendication 12,
**caractérisé en ce que**
des arbres creux (50, 86, 89, 90) et des arbres pleins (31, 87, 88, 91) sont fabriqués en tant qu'arbres de sortie (2) avec un diamètre uniforme de la zone de réception pour la roue dentée (3) montée.

14. Procédé de fabrication de transmissions selon la revendication 12 ou 13,
**caractérisé en ce que**
une version à arbre creux et une version à arbre plein d'une transmission (1) avec un couple de sortie sont fabriquées,
une clavette (4) uniforme étant insérée dans l'arbre de sortie (2) dans les deux versions et/ou
chaque fois deux variantes de transmissions sont fabriquées, qui diffèrent par la distance entre arbre d'entrée et arbre de sortie,
les carters de transmission des variantes de transmissions présentant une section transversale uniforme, la section transversale étant donnée par la hauteur et la profondeur du carter, tandis que la longueur de carter comprend la distance entre arbre d'entrée et de sortie,
et les roues dentées de l'arbre de sortie présentant une clavette uniforme et/ou un alésage de siège de roue uniforme
et/ou
différentes variantes de transmissions peuvent être fabriquées,
des roues dentées (3) différentes étant montées sur le même dispositif de serrage, en particulier avec les mêmes moyens de serrage, pour la fabrication de la denture et/ou pour la finition.

15. Procédé de fabrication de transmissions, en particulier selon l'une des revendications 12 à 14,
**caractérisé en ce que**
une gamme de transmissions selon l'une des revendications 1 à 11 est fabriquée.
